(19) Europäisches Patentamt
European Patent Office
Office européen des brevets

(11) **EP 4 485 168 A1**

(12) **EUROPEAN PATENT APPLICATION**

(43) Date of publication:
**01.01.2025 Bulletin 2025/01**

(21) Application number: **23306051.6**

(22) Date of filing: **28.06.2023**

(51) International Patent Classification (IPC):
**G06F 7/483** (2006.01)    **G06N 3/063** (2023.01)

(52) Cooperative Patent Classification (CPC):
**G06F 7/483; G06N 3/0464**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Snap Inc.**
**Santa Monica, CA 90405 (US)**

(72) Inventors:
• **BAMBERG, Lennart**
  **5656 AG EINDHOVEN (NL)**
• **POURTAHERIAN, Arash**
  **5656 AG EINDHOVEN (NL)**
• **WAEIJEN, Luc Johannes Wilhelmus**
  **5656 AG EINDHOVEN (NL)**
• **PIRES DOS REIS MOREIRA, Orlando Miguel**
  **5656 AG EINDHOVEN (NL)**

(74) Representative: **V.O.**
**P.O. Box 87930**
**2508 DH Den Haag (NL)**

(54) **COMPUTATIONALLY EFFICIENTLY DISCRETIZING FLOATING POINT NUMBERS**

(57)    A computation engine is provided herein that comprises a discretizing unit for discretizing a floating point number (X) to provide a discretized floating point number. The floating point number (X) to be discretized has an exponent component with a first number (e) of bits and a mantissa component with a second number (m) of bits, the exponent component has an exponent value and the mantissa component has a mantissa value. The floating point number (X) to be discretized has a value equal to a product of the mantissa value ($V_{MX}$) and the value 2 raised to the exponent value ($V_{EX}$). The discretizing unit is configured to:

a) compute a difference exponent value ($V_{E\Delta}$) of the discretized floating point number by subtracting a reference exponent value ($V_{EY}$) from the exponent value ($V_{EX}$) of the floating point number to be discretized (X);

b) output a value 0 as the discretized floating point value (Discretize(X,Y)) of the discretized floating point number if the difference exponent value ($V_{E\Delta}$) is less than 0;

c) if the difference exponent value ($V_{E\Delta}$) is greater than or equal to 0 output a value of the discretized floating point number having an exponent component equal to the difference exponent value ($V_{E\Delta}$) and having a mantissa component of which the n most significant bits are equal to the n most significant bits of the floating point number (X) to be discretized, where the value of n is equal to the difference exponent value ($V_{E\Delta}$).

FIG. 3

**Description**

BACKGROUND

The present disclosure pertains to a computation engine for discretizing floating point numbers.

The present disclosure further pertains to a computing device configured to perform neural network operations of a neural network, the computing device comprising a computation engine.

The present disclosure still further pertains to a computation method for discretizing floating point numbers.

The present disclosure also pertains to a neural network method configured to perform neural network operations of a neural network, therewith using the computation method.

For many applications it is desirable to use a floating point format in view of its large value range. An exemplary application is neural network computing. However, developments in neural network technology rather tend to result in more and more complex neural networks with more layers and more neural network operations to be performed. There is a need to mitigate the computational effort involved in these operations to render it possible that also these more complex neural networks can be performed with modest computational means.

SUMMARY

According to a first aspect of the present disclosure an improved computation engine for discretizing floating point numbers is provided herein.

According to a second aspect a computing device comprising an improved computation engine for performing a discretization operations for the purpose of neural network processing.

According to a third aspect of the present disclosure an improved computation method for discretizing floating point numbers engine is provided herein.

According to a fourth aspect of the present disclosure an improved computation method for discretizing floating point numbers for the purpose of neural network operations is provided herein.

The improved computation engine according to the first aspect comprises a discretizing unit for discretizing a floating point number in order to provide a discretized floating point number.

Floating point numbers comprise an exponent component with a first number of bits and a mantissa component with a second number of bits. Optionally floating point numbers also have a sign bit.

The exponent component has an exponent value and the mantissa component has a mantissa value. The floating point number to be discretized has a value equal to a product of the mantissa value and the value 2 raised to the exponent value. A sign bit if included indicates whether the floating point number has a positive or a negative value.

For neural network applications the FP16 format is very useful. Numbers specified in this format subsequently have a sign bit, 5 exponent bits and 10 mantissa bits, however other formats maybe useful as well depending on accuracy requirements and availability of computational resources.

The inventors recognized that a substantial computational effort is involved in the discretization of a floating-point number with respect to a predefined level in the hardware. Conventionally this requires a floating-point division operation and multiplication operation. The overall operation of discretization of a floating-point number X with respect to a floating-point positive number *Y*, referred to as *discretization level*, can be formulated as:

$$\mathrm{Discretize}(X,Y) = \mathrm{sign}(X) \times \left\lfloor \frac{|X|}{Y} \right\rfloor \times Y.$$

The conventional way of discretization also substantially contributes to a latency in operation of the neural network.

The improved computation engine comprises a discretizing unit that performs this operation in a computationally efficient way. For this purpose, it is configured to:

    a) compute a difference exponent value of the discretized floating point number by subtracting a reference exponent value from the exponent value ($V_{EX}$) of the floating point number to be discretized;
    b) output a value 0 as the discretized floating point value of the discretized floating point number if the difference exponent value is less than 0;
    c) if the difference exponent value is greater than or equal to 0 output a value of the discretized floating point number having an exponent component equal to the difference exponent value and having a mantissa component of which the n most significant bits are equal to the n most significant bits of the floating point number to be discretized, where the value of n is equal to the difference exponent value.

Contrary to conventional solutions the discretizing unit in the improved computation engine merely needs to perform simple arithmetic and logical operations. These comprise a subtraction a) to compute the difference exponent value, a comparison b) to determine whether or not the difference exponent value is at least 0. In case it is determined by the comparison that the difference exponent value is at least 0, a discretized mantissa component is obtained of which the $n$ most significant bits are equal to the $n$ most significant bits of the floating point number to be discretized. The value of $n$ is equal to the difference exponent value. All operations involved can be performed with low computational costs.

In an embodiment the computation unit is configured to set to 0 any bits of the mantissa of the discretized floating point number other than the most significant bits. This has the advantage that the computation result can be very efficiently encoded for storage or transmission. In alternative embodiments the other bits (if any) are referred to as don't care bits or be assigned arbitrary binary values. The exponent value of the output result indicates that only the A recipient of the output result knows that the $n$ most significant bits are relevant, wherein the number $n$ is equal to the difference exponent value.

In an embodiment of the computation unit the floating point number X to be discretized is specified in the FP16 number format. This number format provides a large dynamic range and provides for an accuracy that is suitable for may applications, such as neural network applications.

The improved computing device according to the second aspect is configured to perform neural network operations of a neural network, comprises a computation engine as specified above. In an example thereof, the computation engine therein is configured to perform the efficient discretization operations to floating point data to be exchanged between neurons in the neural network.

The improved computation method according to the third aspect comprises:

a) computing an exponent difference value as the difference between the value of the exponent component of the floating point number to be discretized and a reference exponent component value;
b) outputting a value 0 for the discretized floating point number if the exponent difference value is less than 0;
c) if the difference exponent value is greater than or equal to 0 outputting a value of the discretized floating point number having an exponent component equal to the difference exponent value and having a mantissa component of which the $n$ most significant bits are equal to the $n$ most significant bits of the floating point number to be discretized, where the value of $n$ is equal to the difference exponent value.

An embodiment of the improved method comprises setting to 0 any bits other than the most significant bits of the mantissa of the discretized floating point number to 0.

In an embodiment of the improved method the floating point number to be discretized is specified in the FP16 number format.

The method according to the fourth aspect of performing neural network operations of a neural network, comprises performing the improved method to discretize floating point data to be exchanged between neurons in the neural network.

BRIEF DESCRIPTION OF THE DRAWINGS

FIG. 1 schematically shows an exemplary data processing device;
FIG. 2 shows an exemplary neural network to be implemented by the data processing device;
FIG. 3 shows an embodiment of an improved computation engine;
FIG. 4 shows an embodiment of an improved computation method.

DETAILED DESCRIPTION OF EMBODIMENTS

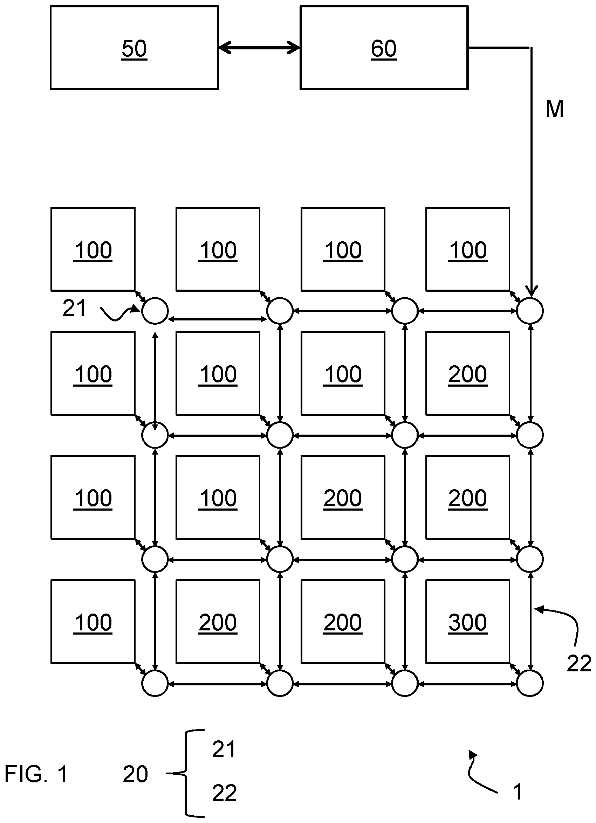

FIG. 1 schematically shows a data processing device 1 comprising a plurality of computation engines 100, and further computational facilities 200, 300 that communicatively coupled to each other by a message exchange network 20 having a node 21 for each of the computation engines 100, and the further computational facilities 200, 300. Links 22 are provided to pass messages between neighboring nodes in the network grid. The plurality of computation engines 100, each have a proper storage location in the processing system for storing a state and having a respective system element identifier that identifies the data processing system element within the data processing device. Also the further computational facilities 200, 300 typically have a proper storage location. In the example shown, the data processing device further has an input facility 50 to receive input data from an external source. A mapping facility 60 provided in this example provides for an efficient routing of arrays of data. More details are provided in international patent application PCT/EP2020/061492.

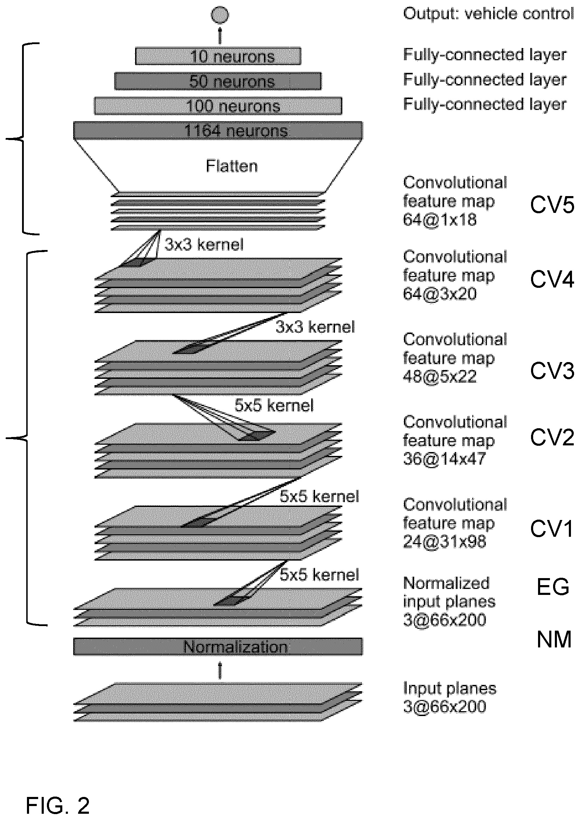

A data processing device 1 as shown in FIG. 1 is particularly suitable for implementation of a neural network. An exemplary neural network is illustrated in FIG. 2. The exemplary neural network of FIG. 2 comprises a plurality of mutually succeeding neural network processor layers. In this example the neural network processor comprises a total of 10 layers, including 4 fully connected layers FC1, FC2, FC3, FC4 and 5 convolutional layers CV1, CV2, CV3, CV4, CV5. In this example RGB data from an input plane PL with a resolution of 66x200 pixels is normalized in normalization unit NM. In the example shown, a conversion unit EG is provided to convert normalized data from to localized event data, such that an event-message E(t,x,y) for a pixel with coordinates x,y is provided at point in time t to the first convolutional layer CV1 if an event decision function indicates that a significant change occurred for said pixel. This may for example be the case if a sum of absolute differences for the color coordinates (R,G,B) in a corresponding color plane exceeds a threshold value. More details are provided in international patent application PCT/EP2020/086846. It is noted that the neural network of FIG. 2, which is configured to be trained to provide vehicle control data, is merely provided as an example. Various other neural network architectures are known as such for various other applications like audio signal processing, image segmentation (typically to be performed by a U-Net architecture) and for correlating signals. Whereas in the example of FIG. 2 a conversion to event data takes place, this is not mandatory.

In a computation device as shown in FIG. 1 the computational load involved to perform the neural network operations, for example of the neural network of FIG. 2 or another neural network, is distributed over the computation engines. Nevertheless, it is still desirable to reduce the computation load, to achieve a higher performance with which the neural network can be executed by the computation device, to render it possible to execute the neural network with a simplified computation device or to render it possible to upgrade the computation device for implementing more complex neural networks.

n computing, half precision (sometimes called FP16 or float16) is a binary floating-point computer number format that occupies 16 bits (two bytes in modern computers) in computer memory. It is intended for storage of floating-point values in applications where higher precision is not essential, in particular image processing and neural networks.

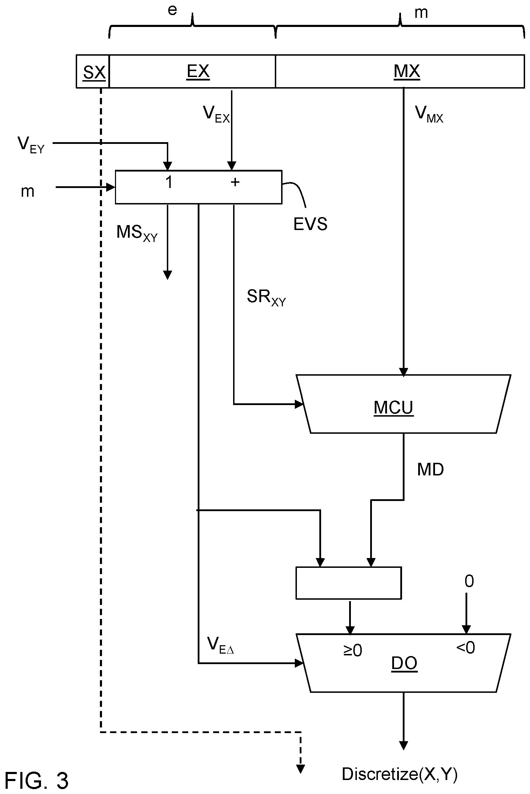

FIG. 3 schematically shows a discretization unit in an exemplary embodiment of an improved computation engine as disclosed herein.

The improved discretizing unit discretizes a floating point number X with respect to a floating-point positive number Y in a computationally efficient manner. The floating-point positive number Y is referred to as discretization level so as to provide the discretized floating point number.

The floating point number X to be discretized has an exponent component EX with a first number e of bits and a mantissa component MX with a second number m of bits.

The floating point number X has a value Vx determined as follows:
$V_X = 2^{V_{EX}} * V_{MX}$ wherein $V_{EX}$ is the exponent value and $V_{MX}$ is the mantissa value. Further the floating point number may have a sign (+/-), for example determined by a sign-bit SX, such that:

$$V_X = (-1)^{SX} 2^{V_{EX}} * V_{MX}$$

The values $V_{EX}$ and $V_{MX}$ are determined by a further convention.

In a straightforward implementation the exponent value $V_{EX}$ is directly determined by the integer value of the exponent component. For example, the exponent component 00001 corresponds to a decimal value 1 and the exponent component 00101 corresponds to the decimal value 5.

The mantissa component may for example express a fraction $0.m_{m-1}, m_{m-2},...,m_0$, wherein $m_{m-1}, m_{m-2},...,m_0$, are the m mantissa bits in an order from most significant to least significant.

In another implementation the exponent value $V_E$ is the integer value of the exponent component minus a second integer value. For example in the FP16 notation the exponent value $V_E$ is the integer value of the exponent component minus the value 15. The mantissa value therein is equal to $1.m_{m-1}, m_{m-2},...,m_0$. I.e, a value 1 is added to the value of the fraction specified by the mantissa bits $m_{m-1}, m_{m-2},...,m_0$.

In the example shown in FIG. 3, the discretizing unit comprises an exponent value subtraction module EVS that determines an exponent difference value $V_{E\Delta}$ computed as the exponent value $V_{EX}$ of the number X to be discretized minus the exponent value $V_{EY}$ of the exponent component of the discretization level Y. i.e. $V_{E\Delta} = V_{EX} - V_{EY}$. The exponent value subtraction module EVS also determines a mask size $MS_{XY}$ as:

$$MS_{XY} = max(m - V_{E\Delta}, 0).$$

And further determines a selection range size $SR_{XY}$ which is complementary to the mask size, i.e.

$$SR_{XY} = m - MS_{XY} = min(V_{E\Delta}, 0)$$

If the result exponent difference value $V_{E\Delta}$ is greater than or equal to 0 then a mantissa computation unit MCU provides a discretized mantissa component MD of which the $SR_{XY}$ most significant bits are identical to the $SR_{XY}$ most significant bits taken from the mantissa component MX of the floating point number X to be discretized. In an example, further the $MS_{XY}$ least significant bits of the discretized mantissa component MD are set to 0.

With these operations the discretized floating point number is defined by its exponent component being equal to the exponent difference value $V_{E\Delta}$ (unless the exponent difference value $V_{E\Delta}<0$, in which case the exponent component is 0), and the discretized mantissa component MD provided by the mantissa computation unit, and optionally a sign bit corresponding to the sign bit SX of the floating point number X to be discretized provided at its input as illustrated by the dashed line.

The discretizing unit is configured to provide at its output the discretized floating point number value 0 if the exponent difference value $V_{E\Delta}<0$.

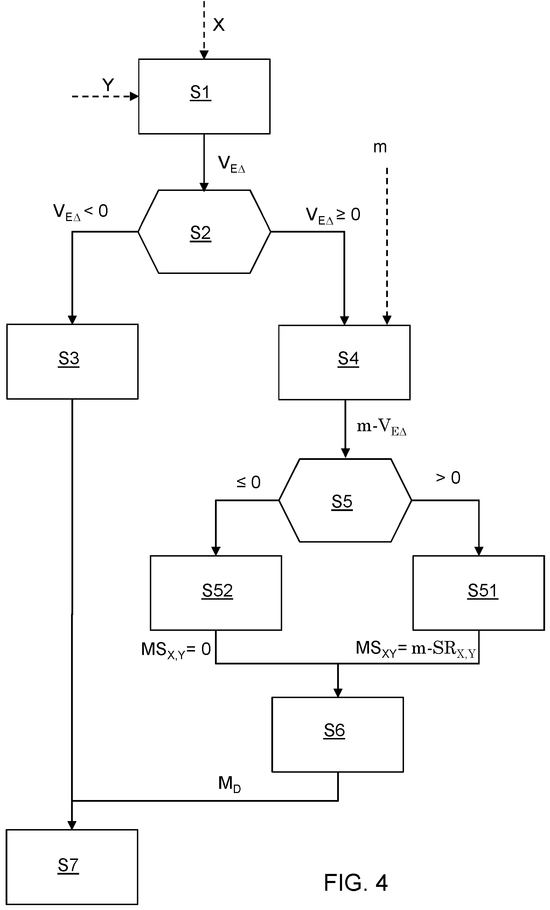

The improved method is now further elucidated for a number of examples, with reference to the FIG. 4. In these examples it is presumed that the floating point number X to be discretized, further denoted as input value, is provided in the FP16 format. This format comprises a sign bit, an exponent component EX with a number e =5 of bits and a mantissa component MX specified with a number m = 10 of bits exclusive an implicit most significant bit. The value of this implicit most significant bit is equal to 1 unless the exponent component is equal to 0. The value $V_{FP16}$ of a number in the FP16 representation is determined by.

$$V_{FP16} = (-1)^S \, 2^{V_{exp}} * V_{mnt}$$

Therein the exponent value $V_{exp}$ is the value represented by the exponent component reduced by 15.

The mantissa value $V_{mnt}$ is the value represented by the value 1+the value of the fraction expressed by the mantissa.

This notation, while requiring a modest number of bits allows for a large dynamical range. I.e. the smallest positive normal number therein is expressed as S=0 EXP= 00001 MNT=0000000000, which corresponds to a decimal value of approximately 0.00006103515625. The largest normal number therein is expressed as S=0 EXP= 11110, MNT= 1111111111, which corresponds to a decimal value of 65504. In addition the FP16 notation includes the following special cases. S=0, EXP=00000, MNT = 0000000000 for the value 0. Infinity is designated by S=0, EXP = 11111, MNT = 0000000000 and negative infinity by S = 1, EXP = 11111, MNT = 0000000000. Still further sub-normal numbers in a decimal range between about 0.00006103515625 and 0.000060975552 can be expressed.

Examples are presented for various ratios of X/Y.

For now it is presumed that the value of the reference Y is 1.

This implies that Y is expressed in the FP16 notation as (S=) 0 (EXP=) 01111 (MNT=) 0000000000

Example 1

In a first example the value X is less than the reference value Y.

For example, X has the value 0 01101 0101010101 in FP16 notation which approximates the decimal fraction 1/3.

In this example, the decimal value (Vx) of the exponent component EX of X equals -2, which is less than the decimal value of the reference exponent, i.e. the exponent component of Y, which is 0. Accordingly, in step S1 it is determined that the exponent difference value $V_{E\Delta}$ = -2. Accordingly, in step S2 it is determined that the exponent difference value $V_{E\Delta}<0$. Hence in step S3 it is determined that the discretized floating point value Discretize (X,Y) has a value of 0. In step S7 this value is outputted.

It can be immediately seen that the same result is obtained for other combinations wherein X<Y. In each case the decimal value of the exponent component of X is less than the decimal value of the reference exponent.

Example 2

In a second example the value X is in a range between 1 and 2 times the reference value Y. Suppose for example again that Y = 1, and further that X = 1.5, having the FP16 notation 0 01111 1000000000.

For this case, the exponent difference value $V_{E\Delta}$, being the difference of the decimal value Vx of the exponent component EX of X and the decimal value $V_Y$ of the reference exponent is equal to 0.

Now the method accordingly proceeds with step S4, wherein the exponent difference value $V_{E\Delta}$ (0 for this case) is subtracted from the number m (here 10), i.e. the number of mantissa bits to obtain a difference value m-$V_{E\Delta}$. The difference value therewith is equal to the number m. As it is determined in step S5 that the difference value m-Sx,y is greater than 0, it is subsequently determined in step S51 that the mask size $MS_{X,Y}$ is equal to that difference value m-Sx,y., which is 10 in this example.

The method proceeds now with computing in step S6 a discretized mantissa component $M_D$ by concatenation of a most significant bit portion and a least significant bit portion. The most significant bit portion corresponds to a third number of most significant bits of the mantissa component of the input value. The third number is equal to the exponent difference value $V_{E\Delta}$, which is 0 in this case. The least significant bit portion comprises a fourth number of zeros. The fourth number is equal to the mask size $MS_{XY}$, which in this example is equal to the number of mantissa bits (10) of the input value.

The value of the exponent component of the discretized floating point number is obtained by subtracting the reference exponent value from the exponent value of the floating point number to be discretized X. This corresponds to the unmasked bit value $S_{X,Y}$, which is 0 in this case. This is expressed by the binary number 01111 in the exponent component.

As noted above, the discretized mantissa has number of 10 zero's in this case, so that the mantissa value is 1.0. Hence, the computed discretized floating point value comprises the exponent component having decimal value 0 and a mantissa component with value 1, so that the discretized floating point value that is outputted in step S7 equals 1.

Again, it is immediately clear that the same result is obtained for other combinations wherein $Y \leq X < 2Y$. In each of these combinations the decimal value of the exponent component of X is equal to the decimal value of the reference exponent so that the value of the mantissa is 1 (as defined by the 10 zero bits) and the value of the exponent =0 (as defined by the difference of the exponent components).

Example 3

In a third example the value X is in a range between 2 and 3 times the reference value Y. Suppose for example again that Y = 1, and further that X = 2.5, having the FP16 notation 0 1000 0100000000.

For this case, the exponent difference value $V_{E\Delta}$, being the difference of the decimal value of the exponent component EX of X and the decimal value of the exponent component of the reference is equal to 1.

Now the method accordingly proceeds with step S4, wherein the exponent difference value $V_{E\Delta}$ ($V_{E\Delta}$ = 1 for this case) is subtracted from the second number m (here 10), i.e. the number of mantissa bits to obtain a difference value. The difference value therewith is equal to the number m-1 (9 in this case). As it is determined (step S5) that the difference value m- $V_{E\Delta}$ is greater than 0, it is determined in step S51 that the mask size $MS_{XY}$ is equal to that difference value m-$SR_{XY}$., which is 9 in this example.

The method proceeds now with computing in step S6 a discretized mantissa component $M_D$ by concatenation of a most significant bit portion and a least significant bit portion. The most significant bit portion corresponds to a third number of most significant bits of the mantissa component of the input value. The third number is equal to the exponent difference value $V_{E\Delta}$, which is 1 in this case. The least significant bit portion comprises a fourth number of zeros. The fourth number is equal to the mask size $MS_{XY}$, which in this example is equal to the number of mantissa bits reduced by 1 of the input value.

Accordingly, the mantissa component of the discretized floating point number comprises the most significant bit MSB (0) of the mantissa component EM of the input value X and a number of 9 zeros.

The value of the exponent component of the discretized floating point number is obtained by subtracting the reference exponent value from the exponent value of the floating point number to be discretized X. This corresponds to the exponent difference value $V_{E\Delta}$, which is 1 in this case. This is expressed by the binary number 10000 in the exponent component.

As noted above, the discretized mantissa has a number of 10 zero's in this case, so that the mantissa value is 1.0. Hence, the computed discretized floating point value comprises the exponent component having a decimal value 1 and a mantissa with value 0, so that the discretized floating point value that is outputted in step S7 equals 2.

Again, the same result is obtained for other combinations wherein $2Y \leq X < 3Y$. In each of these combinations the decimal value of the exponent component of X is one higher than the decimal value of the reference exponent so that the value of the mantissa is 1 (as defined by the MSB of 0 followed by 9 further zero's) and the value of the exponent = 1 (as defined by the difference of the exponent components), so that the discretized floating point value that is outputted in step S7 equals 2.

Example 4

In a fourth example the value X is in a range between 7 and 8 times the reference value Y. Suppose for example again that Y = 1, and further that X = 7.5, having the FP16 notation 0 1001 11100000000.

For this case, the exponent difference value $V_{E\Delta}$, being the difference of the decimal value of the exponent component of X and the decimal value of the exponent component of the reference is equal to 2.

The method accordingly proceeds with step S4, wherein the exponent difference value $V_{E\Delta}$, ($V_{E\Delta}$ = 2 for this case) is subtracted from the second number m (here 10), i.e. the number of mantissa bits to obtain a difference value. The difference value therewith is equal to the number m-2 (8 in this case). As it is determined (step S5) that the difference value m- $V_{E\Delta}$ is greater than 0, it is determined in step S51 that the mask size $MS_{XY}$ is equal to that difference value m- $V_{E\Delta}$, which is 8 in this example.

The method proceeds now with computing in step S6 a discretized mantissa component $M_D$ by concatenation of a most significant bit portion and a least significant bit portion. The most significant bit portion corresponds to a third number of most significant bits of the mantissa component of the input value. The third number is equal to the exponent difference value $V_{E\Delta}$, which is 2 in this case. The least significant bit portion comprises a fourth number of zeros. The fourth number is equal to the mask size $MS_{XY}$, which in this example is equal to the number of mantissa bits reduced by 2 of the input value, i.e. a mask of 8 zero s.

Accordingly, the mantissa component of the discretized floating point number comprises the two most significant bits MSB (11) of the mantissa component MX of the input value X and a number of 8 zeros.

As noted above, the two most significant bits of the mantissa component of the number X to be discretized are 11 so that the mantissa value is 1.11 (binary) corresponding decimal value 1.75. Hence, the computed discretized floating point value comprises the exponent component having decimal value 2 and a mantissa with value 1.75, so that the discretized floating point value that is outputted in step S7 equals 7.

Again, the same result is obtained for other combinations wherein $7Y \leq X < 8Y$. In each of these combinations the decimal value of the exponent component of X is two higher than the decimal value of the reference exponent so that the value of the mantissa is 1.75 (as defined by the MSBs 11 followed by 8 zero's) and the value of the exponent = 2 (as defined by the difference of the exponent components), so that the discretized floating point value that is outputted in step S7 equals 7.

Fifth example

In a final example, the floating point number X has a value greater than or equal to the value of 1024Y.

For this case, the exponent difference value $V_{E\Delta}$, being the difference of the decimal value of the exponent component EX of X and the decimal value of the exponent component of the reference is greater than or equal to 10.

The method accordingly proceeds with step S4, wherein the exponent difference value $V_{E\Delta}$ ($V_{E\Delta} \geq 10$ for this case) is subtracted from the second number mx(10) therewith obtaining the difference value $\leq 0$. As it is determined (step S5) that the difference value $m - V_{E\Delta}$ is not greater than 0, it is determined in step S52 that the mask size $MS_{XY}$ is equal to 0 in this example.

The method proceeds now with computing in step S6 a discretized mantissa component $M_D$ by concatenation of a most significant bit portion and a least significant bit portion. The most significant bit portion corresponds to a third number of most significant bits of the mantissa component of the input value. The third number is equal to the exponent difference value $V_{E\Delta}$ but not exceeding the number of bits that is actually available. The least significant bit portion comprises a fourth number of zeros. The fourth number is equal to the mask size $MS_{X,Y}$, which in this example is equal to 0.

Accordingly, in this example the mantissa component of the discretized floating point number is equal to the mantissa component MX of the floating point number X to be discretized.

Again, the same result is obtained for other combinations wherein $X \geq 1024Y$. In each of these combinations the decimal value of the exponent component EX of X is at least 10 higher than the decimal value of the exponent component of the reference, so that the mantissa component of the discretized number is identical to the mantissa component MX of the number to be discretized.

EXPERIMENTAL RESULTS

Table 1 shows the comparison of realizing this operation in floating-point with standard instructions for a 32nm processor against the presently claimed discretization method in terms of energy and latency.

| parameter | FP divider+multiplier | Claimed method |
|---|---|---|
| Energy per operation | 700 pJ | 70 pJ |
| Overall energy saving | | 1% |
| Latency per operation | 75 cycles | 2 cycles |
| Latency saving per operation | | 2400 % |
| Latency saving for a typical 10 layer CNN | | 20% |

Clearly the claimed method results in a significant improvement. In particular the claimed method provides for a substantial reduction of the latency of a neural network as a whole.

**Claims**

1. A computation engine comprising a discretizing unit for discretizing a floating point number (X) to provide a discretized floating point number, the floating point number (X) to be discretized having an exponent component with a first number (e) of bits and a mantissa component with a second number (m) of bits, the exponent component having an exponent value and the mantissa component having a mantissa value, the floating point number (X) to be discretized having a value equal to a product of the mantissa value ($V_{MX}$) and the value 2 raised to the exponent value ($V_{EX}$), the discretizing unit being configured to:

   a) compute a difference exponent value ($V_{E\Delta}$) of the discretized floating point number by subtracting a reference exponent value ($V_{EY}$) from the exponent value ($V_{EX}$) of the floating point number to be discretized (X);
   b) output a value 0 as the discretized floating point value (Discretize(X,Y)) of the discretized floating point number if the difference exponent value ($V_{E\Delta}$) is less than 0;
   c) if the difference exponent value ($V_{E\Delta}$) is greater than or equal to 0 output a value of the discretized floating point number having an exponent component equal to the difference exponent value ($V_{E\Delta}$) and having a mantissa component of which the n most significant bits are equal to the n most significant bits of the floating point number (X) to be discretized, where the value of n is equal to the difference exponent value ($V_{E\Delta}$).

2. The computation unit according to claim 1, configured to set to 0 any bits of the mantissa of the discretized floating point number other than the most significant bits.

3. The computation unit according to claim 1 or 2, wherein the floating point number (X) to be discretized is specified in the FP16 number format.

4. A computing device configured to perform neural network operations of a neural network, the computing device comprising a computation engine according to one or more of the claims 1 to 3, the computation engine being configured to apply a discretization operation to floating point data to be exchanged between neurons in the neural network.

5. A computing device configured to perform neural network operations of a neural network, the computing device comprising a computation engine according to one or more of the claims 1 to 4, the computation engine being configured to apply a discretization operation to floating point data representing neuron states.

6. A computing device configured to perform neural network operations of a neural network, the computing device comprising a computation engine according to one or more of the claims 1 to 5, the computation engine being configured to apply a discretization operation to floating point data of a feature map.

7. A method to be performed by a computation engine for discretizing a floating point number (X) having a mantissa component with a first number ($_m$) of bits and an exponent component with a second number (e) of bits, the exponent component having an exponent value and the mantissa component having a mantissa value, the floating point number (X) to be discretized having a value equal to a product of the mantissa value ($V_{MX}$) and the value 2 raised to the exponent value ($V_{EX}$), the method comprising:

   a) computing (S1) an exponent difference value ($S_{E\Delta}$,) as the difference between the value ($V_{EX}$) of the exponent component of the floating point number to be discretized (X) and a reference exponent component value ($V_{EY}$);
   b) outputting a value 0 for the discretized floating point number (Discretize(X,Y)) if the exponent difference value ($S_{E\Delta}$,) is less than 0;
   c) if the difference exponent value ($V_{E\Delta}$) is greater than or equal to 0 outputting a value of the discretized floating point number having an exponent component equal to the difference exponent value ($V_{E\Delta}$) and having a mantissa component of which the n most significant bits are equal to the n most significant bits of the floating point number (X) to be discretized, where the value of n is equal to the difference exponent value ($V_{E\Delta}$).

8. The method according to claim 7, comprising setting to 0 any bits other than the most significant bits of the mantissa of the discretized floating point number to 0.

9. The method according to claim 7 or 8, wherein the floating point number (X) to be discretized is specified in the FP16 number format.

10. A method of performing neural network operations of a neural network, according to any of the claims 7 to 9 comprising discretizing floating point data to be exchanged between neurons in the neural network.

11. A method of performing neural network operations of a neural network, according to any of the claims 7 to 10 comprising discretizing floating point data representing neuron states.

12. A method of performing neural network operations of a neural network, according to any of the claims 7 to 11 comprising discretizing floating point data of a feature map.

FIG. 1    20 { 21
                 22

1

Output: vehicle control

Fully-connected layer
10 neurons

Fully-connected layer
50 neurons

Fully-connected layer
100 neurons

1164 neurons

Flatten

Convolutional feature map 64@1x18    CV5

3x3 kernel

Convolutional feature map 64@3x20    CV4

3x3 kernel

Convolutional feature map 48@5x22    CV3

5x5 kernel

Convolutional feature map 36@14x47    CV2

5x5 kernel

Convolutional feature map 24@31x98    CV1

5x5 kernel

Normalized input planes 3@66x200    EG

NM

Normalization

Input planes 3@66x200

FIG. 2

FIG. 3

X

Y → $\underline{S1}$

$V_{E\Delta}$

m

$V_{E\Delta} < 0$     $\underline{S2}$     $V_{E\Delta} \geq 0$

$\underline{S3}$     $\underline{S4}$

$m\text{-}V_{E\Delta}$

$\leq 0$     $\underline{S5}$     $> 0$

$\underline{S52}$     $\underline{S51}$

$MS_{X,Y} = 0$     $MS_{XY} = m\text{-}SR_{X,Y}$

$\underline{S6}$

$M_D$

$\underline{S7}$

FIG. 4

**Europäisches Patentamt**
**European Patent Office**
**Office européen des brevets**

# EUROPEAN SEARCH REPORT

Application Number

EP 23 30 6051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/201602 A1 (FELIX STEPHEN [GB] ET AL) 25 June 2020 (2020-06-25) <br> * paragraph [0003] – paragraph [0011] * <br> * paragraph [0109] – paragraph [0119] * <br> ----- | 1-12 | INV. <br> G06F7/483 <br> G06N3/063 |
| A | US 2019/122100 A1 (KANG SHINHAENG [KR] ET AL) 25 April 2019 (2019-04-25) <br> * paragraph [0097] – paragraph [0113] * <br> ----- | 1-12 | |
| A | US 2013/007076 A1 (WEGENER ALBERT W [US]) 3 January 2013 (2013-01-03) <br> * paragraph [0089] – paragraph [0099]; figures 18, 19 * <br> ----- | 1-12 | |

**TECHNICAL FIELDS SEARCHED (IPC)**

G06F
G06N

The present search report has been drawn up for all claims

| Place of search | Date of completion of the search | Examiner |
|---|---|---|
| Munich | 18 October 2023 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6051

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | Publication date | Patent family member(s) | | Publication date |
|---|---|---|---|---|
| US 2020201602 A1 | 25-06-2020 | GB | 2580153 A | 15-07-2020 |
| | | US | 2020201602 A1 | 25-06-2020 |
| US 2019122100 A1 | 25-04-2019 | CN | 109685198 A | 26-04-2019 |
| | | EP | 3474194 A1 | 24-04-2019 |
| | | JP | 7296709 B2 | 23-06-2023 |
| | | JP | 2019079531 A | 23-05-2019 |
| | | KR | 20190043849 A | 29-04-2019 |
| | | US | 2019122100 A1 | 25-04-2019 |
| US 2013007076 A1 | 03-01-2013 | TW | 201322118 A | 01-06-2013 |
| | | US | 2013007076 A1 | 03-01-2013 |
| | | US | 2013007077 A1 | 03-01-2013 |
| | | US | 2013007078 A1 | 03-01-2013 |
| | | WO | 2013003479 A2 | 03-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2020061492 W
- EP 2020086846 W